# EUROPÄISCHE PATENTANMELDUNG

(11) **EP 4 302 954 A1**
(43) Veröffentlichungstag der Anmeldung: **10.01.2024**
(21) Anmeldenummer: 23181611.7
(22) Anmeldetag: 27.06.2023
(51) Int. Cl.: B29B 9/06, B29C 48/00

(54) **UNTERWASSERGRANULIERER**

(30) Priorität: 07.07.2022 DE 102022117007
(71) Anmelder: Maag Germany GmbH, 63762 Großostheim (DE)
(72) Erfinder: BUCHHOLZ, Dominik, 47638 Straelen (DE); ELOO, Michael, 46509 Xanten (DE); SLADKY, Patrick, 47608 Geldern (DE); VELTEL, Jürgen, 47626 Kevelaer (DE); FRIDLEY, Michael A., Troutville, Virginia 24175 (US)
(74) Vertreter: Thoma, Michael

(57) **Zusammenfassung**

Unterwassergranulierer mit einer Lochplatte (2), einem Schneidkammergehäuse (3) mit einer Schneidkammer (4), sowie einem rotierend antreibbaren Messerkopf (5), der in der Schneidkammer (4) zum Zerteilen von Schmelzesträngen, die aus der Lochplatte (2) austreten, zu Granulat angeordnet ist, wobei die Schneidkammer (4) von Prozesswasser durchspülbar ist, das durch zumindest einen Einlass (6, 7) in die Schneidkammer (4) einleitbar und zusammen mit dem zerteilten Granulat über einen Auslass (8) aus der Schneidkammer (4) abführbar ist, wobei im Schneidkammergehäuse (3) mehrere Strömungskanäle und/oder -kammern zum Erzeugen verschiedener Prozesswasserströme vorgesehen sind, die zumindest einen mitrotierenden Strömungspfad (9), der durch zumindest einen Messerkopfkanal (10) durch den rotierenden Messerkopf (5) hindurchführt, sowie zumindest einen nicht mit dem Messerkopf (5) mitrotierenden Strömungspfad (11), der aus einem feststehenden Einlass (6) in die Schneidkammer (4) führt, wobei zumindest zwei separate Einlässe (6, 7) zum separaten Beschicken des mitrotierenden Strömungspfads und des nicht rotierenden Strömungspfads stirnseitig von der der Lochplatte (2) gegenüberliegenden Stirnseite der Schneidkammer (4) in die genannte Schneidkammer (4) geführt sind, wobei im Schneidkammergehäuse (3) zumindest eine ringförmige, feststehende Verteilerkammer (12) vorgesehen ist, die zumindest eine frontal zur Lochplatte (2) direkt in die Schneidkammer (4) mündende Auslassöffnung (13) zum Beschicken des nicht-mitrotierenden Strömungspfads (11) aufweist.

## Beschreibung

Die vorliegende Erfindung betrifft einen Unterwassergranulierer zum Granulieren von schmelzeförmigen Stoffen wie beispielsweise Polymerschmelzen, mit einer Lochplatte, einem Schneidkammergehäuse mit einer Schneidkammer, sowie einem rotierend antreibbaren Messerkopf, der in der Schneidkammer zum Zerteilen von Schmelzesträngen, die aus der Lochplatte austreten, zu Granulat angeordnet ist, wobei die Schneidkammer von einer Prozessflüssigkeit durchspülbar ist, die durch zumindest einen Einlass in die Schneidkammer einleitbar und zusammen mit dem Granulat über einen Auslass aus der Schneidkammer abführbar ist, wobei im Schneidkammergehäuse mehrere Strömungskanäle zum Erzeugen verschiedener Prozessflüssigkeitsströme vorgesehen sind, die einen mitrotierenden Strömungspfad, der durch zumindest einen Messerkopfkanal im Messerkopf hindurchtritt, sowie zumindest einen nicht mit dem Messerkopf mitrotierenden Strömungspfad in die Schneidkammer umfasst.

Bei Unterwassergranulierern läuft der Schneidkopf mit den daran befestigten Messern bzw. Abschlagplatten zum Zerteilen bzw. Abschlagen der Schmelzestränge, die aus den Bohrungen der Lochplatte austreten, in einer Schneidkammer, die von einem Schneidkammergehäuse begrenzt wird und von Prozesswasser durchspült wird, sodass der Messerkopf "unter Wasser" läuft und die Schmelzestränge im Wasserbad granuliert werden. Hierdurch wird nicht nur der Abtransport des Granulats erleichtert, das vom aus der Schneidkammer auslaufenden Prozesswasser mitgenommen und in Form eines Wassergranulat-Gemischs abgefördert wird, sondern es kann vor allen Dingen auch ein Verkleben der zerteilen Pellets bzw. ein Anbacken des Granulats an Anlagenoberflächen vermieden werden, da das temperierte Prozesswasser die üblicherweise heißeren Kunststoffstränge, die aus der Lochplatte austreten, bzw. das zerteile Granulat an der Oberfläche abschreckt bzw. abkühlt und damit die Klebrigkeit verringert.

Klarzustellen ist in diesem Zusammenhang, dass Prozesswasser kein reines Wasser sein muss, sondern im Sinne einer Prozessflüssigkeit zu verstehen ist, die Wasser, aber auch andere Flüssigkeiten enthalten oder aus anderen Flüssigkeiten bestehen kann, wobei oft mit Zusätzen versehenes Wasser als Prozessflüssigkeit verwendet wird.

Neben der gewünschten Reduzierung der Neigung zum Verkleben muss das Durchspülen der Schneidkammer mit Prozesswasser aber auch noch andere Aufgaben erledigen bzw. unterstützen und auch negative Effekte vermeiden. Beispielsweise soll bei bestimmten Anwendungen das Granulat nicht zu stark abgekühlt werden, um im Granulat eine ausreichende Restwärme zu haben, die beispielsweise eine nachfolgende Kristallisation bewirken bzw. unterstützen kann. Hierfür wird neben einer geeigneten Temperierung des Prozesswassers eine kurze Verweilzeit des Granulats im Prozesswasser angestrebt, was an sich einhergeht mit einem raschen Abtransport des zerteilen Granulats aus der Schneidkammer.

Bei Granulieren mit hohem Durchsatz verschärft sich die Thematik des Abtransports des zerteilten Granulats aus der Schneidkammer. Bei großindustriellen Anlagen kann der Durchsatz der Schmelze durch die Lochplatte und damit der Durchsatz des zerteilten Granulats durch die Schneidkammer Größenordnungen von mehr als 20 t/h oder mehr als 30 t/h oder auch mehr als 40 t/h betragen. Um solche großen Granulatmengen aus der Schneidkammer abfördern zu können, ist eine effiziente Durchspülung der Schneidkammer mit Prozesswasser erforderlich, um Granulatanhäufungen in toten Strömungswinkeln bzw. -strudeln, die schlimmstenfalls zu einem Verstopfen der Schneidkammer führen könnten, tunlichst zu vermeiden.

Ein für solche Granulatanhäufungen empfindlicher Bereich ist dabei bisweilen der zentrale stirnseitige Spalt zwischen Messerkopf und Lochplatte. Üblicherweise sind die Lochplattenbohrungen in einem ringförmigen Bereich um das Lochplatten- bzw. Messerkopfzentrum herum angeordnet, in dem die Messer bzw. Abschlagplatten des Messerkopfes mit einer bestimmten Schnittgeschwindigkeit über die Lochplatte streichen, um die aus den Lochplattenbohrungen austretenden Stränge in der gewünschten Weise abzuschneiden bzw. abzuschlagen. Innerhalb der von den Messern überstrichenen Ringfläche kann sich Granulat ansammeln, wenn das Prozesswasser diesen Bereich nicht konsequent spült.

Neben der genannten Spülwirkung soll das Prozesswasser aber auch insbesondere im genannten Ringbereich, in dem die Schneidmesser die Lochplattenbohrungen überstreichen, kühlen, um zum einen das dort austretende und zu zerschneidende Schmelzematerial zu kühlen bzw. oberflächlich abzuschrecken und auch die Schneidmesser und die Lochplatte zu kühlen.

Um die zum Teil gegenläufigen Anforderungen an die Prozesswasserführung in der Schneidkammer zu erfüllen, wurde bereits vorgeschlagen, das Prozesswasser entlang bestimmter Strömungspfade in die Schneidkammer einzuleiten und auch den Abfluss in bestimmter Ausrichtung anzuordnen, um das Abführen des Granulat-Prozesswasser-Gemischs zu erleichtern. Beispielsweise wurde bereits vorgeschlagen, den Einlass, durch den das Prozesswasser in die Schneidkammer geleitet wird und den Auslass, über den das Prozesswasser zusammen mit dem Granulat aus der Schneidkammer austritt, tangential an der üblicherweise zylinderförmigen Mantelfläche des Schneidkammergehäuses anzuordnen, sodass das Prozesswasser beim Durchspülen der insgesamt zylindrischen Schneidkammer eine spiralförmige bzw. der Mantelfläche des Gehäuses folgende Strömung durch die Schneidkammer erhält. Beispielsweise schlägt die Schrift WO 2019/063123 A1 vor, die Ein- und Ausläufe für das Prozesswasser an der Oberseite des Schneidkammergehäuses in axialer Richtung voneinander beabstandet anzuordnen und ggf. tangential geneigt anzustellen, um eine spiralförmige Durchspülung der Schneidkammer zu erzielen. Gleichzeitig kann durch die Anordnung der Ein- und Ausläufe an der Oberseite des Schneidkammergehäuses ein Öffnen des Schneidkammergehäuses mittels eines unterseitigen Deckels ermöglicht werden, um nach Entfernen des unterseitigen Gehäusedeckels Zugang zum Messerkopf beispielsweise für die Wartung oder Reinigung der Schneidkammer zu haben.

Ferner wurde auch bereits vorgeschlagen, das Prozesswasser über mehrere, separate Einlässe bzw. Strömungspfade in die Schneidkammer einzuleiten, um verschiedene Anforderungen an die Prozesswasserspülung individuell gezielt steuern zu können. Beispielsweise schlägt die Schrift EP 30 62 978 B1 vor, einen Teil des Prozesswassers über einen ersten Strömungspfad koaxial zur Antriebsachse des Messerkopfes zuzuführen und durch Strömungskanäle im Messerkopf frontal auf einen zentralen Bereich der Lochplatte zu spülen, wobei der Strömungspfad im Bereich der Strömungskanäle durch den Messerkopf hindurch mit dem Messerkopf mitrotiert. Dieser Teil des Prozesswassers soll vorrangig der Kühlung der Schmelzestränge beim Abschlagen dienen. Ein anderer Teil des Prozesswassers wird über einen zweiten Prozesswasser-Einlass vom Außenumfang des Schneidkammergehäuses her in die Schneidkammer eingeleitet, wobei dieser umfangsseitig eingeleitete Prozesswasserstrom vorrangig der Durchspülung und Mitnahme der Pellets zum gegenüberliegenden Auslass für das Prozesswasser-Granulat-Gemisch dient. Die beiden Prozesswasserströme können dabei individuell voneinander mengenmäßig gesteuert werden, um die Kühlwirkung beim Zerschneiden des Granulats einerseits und die Spülwirkung durch die Schneidkammer hindurch andererseits individuell beeinflussen zu können.

Solche mehrpfadigen Strömungsleitsysteme erfordern jedoch bisweilen komplexe Schneidkammergehäuse-Strukturen, die die Wartungs- und Reinigungsfreundlichkeit der Schneidkammer beeinträchtigen. Insbesondere ist es oft schwierig, das Schneidkammergehäuse bei solchen mehrpfadigen Strömungssystemen zu öffnen, um Zugang zum Schneidmesser bzw. zum Inneren der Schneidkammer zu erreichen. Zum anderen ist auch die Spülwirkung bislang noch nicht optimal gelöst worden, da speziell der Zentralbereich zwischen Messerkopf und Lochplatte innerhalb der rotierenden Messer zum Ansammeln von Granulat neigt.

Der vorliegenden Erfindung liegt daher die Aufgabe zugrunde, einen verbesserten Unterwassergranulierer der genannten Art zu schaffen, der Nachteile des Standes der Technik vermeidet und letzteren in vorteilhafter Weise weiterbildet. Insbesondere soll auch bei hohen Granulatdurchsätzen durch die Schneidkammer durch geschicktes Durchspülen der Schneidkammer mit Prozesswasser ein klebefreier Schnitt der Schmelzestränge zu Granulat, ein verlässlicher, rückstandsfreier Abtransport der Granulate aus der Schneidkammer und eine kurze Verweilzeit der Granulate in der Schneidkammer erreicht werden, um gewünschte Nachbehandlungsschritte mit verbleibender Restwärme zu ermöglichen.

Erfindungsgemäß wird die genannte Aufgabe durch einen Unterwassergranulierer gemäß Anspruch 1 gelöst. Bevorzugte Ausgestaltungen der Erfindung sind Gegenstand der abhängigen Ansprüche.

Es wird also vorgeschlagen, das Prozesswasser über zumindest zwei Einlässe von der Stirnseite der Schneidkammer her, die der Lochplatte gegenüberliegt, zuzuführen, wobei einer der stirnseitigen Einlässe auf den Messerkopf und dessen zumindest einen Schneidmesserkanal mit frischem Prozesswasser beschickt und insofern den mitrotierenden Strömungspfad bedient, während ein anderer der genannten stirnseitigen Einlässe direkt ohne Umleitung über den Messerkopf in die Schneidkammer führt und den nicht mit dem Messerkopf mitrotierenden, feststehenden Strömungspfad beschickt, der außerhalb des Messerkopfs frontal auf die Lochplatte gerichtet ist. Erfindungsgemäß ist im Schneidkammergehäuse zumindest eine ringförmige, feststehende Verteilerkammer vorgesehen, die auf der der Lochplatte gegenüberliegenden Stirnseite der Schneidkammer angeordnete Auslassöffnung aufweist, die frontal zur Lochplatte direkt in die Schneidkammer mündet.

Der durch den rotierenden Messerkopf geführte und insofern mitrotierende Zulaufstrom und der nicht durch das rotierende Messer geführte, aus einem feststehenden Auslass in die Schneidkammer strömende und insofern nicht mitdrehende Zulaufstrom ergänzen sich und spülen das zerteilte Granulat von der Lochplatte weg, wobei der mitrotierende Zulaufstrom und der nicht mitrotierende Zulaufstrom beide von der gegenüberliegenden Schneidkammerstirnseite her auf die Lochplatte gerichtet sind, jedoch dort auf unterschiedliche Bereiche treffen. Während der mitrotierende Zulaufstrom mehr zentral und insbesondere innerhalb des von den Messern überstrichenen Ringbereichs auf die Lochplatte gerichtet ist, kann der nicht mitrotierende bzw. aus dem festen Auslass kommende Zulaufstrom weniger zentral bzw. weiter außen und insbesondere außen am Messerkopf vorbei und/oder im Bereich der rotierenden Messer auf die Lochplatte gerichtet sein. Die fest angeordnete Auslassöffnung, die den nicht mitrotierenden Strömungspfad bedient, kann insbesondere radial außerhalb des Durchmesserbereichs des Messerkopfs angeordnet sein und/oder vom Messerkopf derart beabstandet und/oder dazu derart ausgerichtet sein, dass der aus der genannten Auslassöffnung austretende Prozesswasserstrom nicht stirnseitig auf den Messerkopf trifft und durch die dort vorgesehenen Messerkopfkanäle tritt, sondern seitlich bzw. umfangsseitig am Messerkopf vorbeiströmt und auf einen radial außerhalb des Durchmesserbereichs des Messerkopfs liegenden Lochplattenringbereich trifft und ggf. noch auf radial vom Messerkopfkorpus abstehende Messer trifft.

In Weiterbildung der Erfindung kann die direkt in die Schneidkammer mündende Auslassöffnung der genannten ringförmigen, feststehenden Verteilerkammer von der Drehachse des Messerkopfs weiter beabstandet angeordnet sein als die Auslassöffnung des zumindest einen mitrotierenden, durch den Messerkopf führenden Messerkopfkanals.

Ferner kann die direkt in die Schneidkammer mündende Auslassöffnung auch axial, also in Richtung senkrecht zur Lochplatte, von der genannten Lochplatte weiter beabstandet sein als eine Auslassöffnung des Einlasses, der den mitrotierenden Strömungspfad durch den Messerkopf hindurch bedient. Insbesondere kann die innere, den mitrotierenden Strömungspfad bedienende Einlassöffnung direkt an einer Rückseite des Messerkopfs bzw. des Messerträgers des Messerkopfs enden bzw. positioniert sein, ggf. durch einen kleinen Spalt von der Rückseite des Messerkopfs getrennt, während die andere Auslassöffnung, die den nicht mitrotierenden Strömungspfad bedient, von der Lochplatte und auch von der Rückseite des Messerkopfs deutlich weiter beabstandet ist, beispielsweise um einen Abstand, der mindestens der doppelten Höhe der Schneidmesser entspricht. Der axiale Abstand der äußeren Einlaufmündung, die den nicht rotierenden Strömungspfad bedient, von der genannten Rückseite der Lochplatte kann mehr als doppelt so groß oder auch mehr als dreimal so groß oder mehr als fünfmal so groß sein als der Abstand, den die Einlauföffnung des rotierenden Strömungspfads von der genannten Rückseite der Lochplatte hat.

Die zumindest eine direkt in die Schneidkammer führende Auslassöffnung der genannten ringförmigen Verteilerkammer kann nach Art eines Langlochs schlitzförmig ausgebildet sein, beispielsweise nierenförmig ausgebildet sein und/oder sich beispielsweise bogenförmig um die Rotationsachse des Messerkopfs herum erstrecken, um der Schneidkammer über einen größeren Sektor verteilt frisches Prozesswasser zuführen zu können. Beispielweise kann sich die genannte Auslassöffnung schlitzförmig über einen Sektor von mehr als 90° oder mehr als 120° oder auch mehr als 180° erstrecken, insbesondere auf einer der Auslassöffnung gegenüberliegenden Seite der Schneidkammer, um der Schneidkammer in einem entsprechend großen Sektor frisches Prozesswasser zuleiten zu können, das dann in der Schneidkammer zerteiltes Granulat mitnimmt und zur Auslassöffnung transportiert. Gegebenenfalls kann die genannte Auslassöffnung der ringförmigen Verteilerkammer sich auch ringförmig vollständig um die Drehachse des Messerkopfs herum erstrecken, beispielsweise in Form eines kreisförmigen Auslassschlitzes in der der Lochplatte gegenüberliegenden Stirnwandung der Schneidkammer.

Alternativ oder zusätzlich zu einer solchen langlochförmigen bzw. schlitzförmigen oder ringkreisförmigen Auslassöffnung kann die genannte ringförmige Verteilerkammer aber auch mehrere voneinander beabstandete Auslassöffnungen aufweisen, die in der der Lochplatte gegenüberliegenden Stirnseite der Schneidkammer angeordnet und frontal auf die Lochplatte zu gerichtet sein können. Frontal auf die Lochplatte ausgerichtet kann dabei meinen, dass die Längsachse der Austrittsöffnung und damit die Strömungsrichtung des in die Schneidkammer eintretenden Prozessfluids tatsächlich senkrecht auf die Lochplatte steht, wobei aber auch mehr oder weniger schräg angestellte Auslassöffnungen, die zur Schneidfläche der Lochplatte beispielsweise unter einem Winkel von 85° bis 95° oder 80° bis 100° oder 70° bis 110° geneigt angestellt sind, immer noch als frontal auf die Lochplatte gerichtet bezeichnet sein können.

Die zumindest eine Auslassöffnung der ringförmigen Verteilerkammer, die direkt in die Schneidkammer hineinführt, kann insbesondere eine Strömungsrichtung für das in die Schneidkammer gelangende Prozesswasser vorgeben, die zumindest näherungsweise parallel zur Drehachse des Messerkopfs ausgerichtet ist.

Alternativ zu einem exakt axialen Einleiten des direkt spülenden Prozesswassers kann das Prozesswasser aber auch vorteilhafterweise mit einem Drall und/oder mit einer in Umfangsrichtung geneigten Bewegungskomponente in die Schneidkammer gerichtet werden, insbesondere derart, dass sich das Prozesswasser in Rotationsrichtung des Messerkopfs dreht bzw. verschraubt, d.h. zusätzlich zur Axialkomponente auch eine Bewegungskomponente in Umfangsrichtung mit einem Drehsinn entsprechend der Messerkopfdrehung ausführt. Dies kann beispielsweise durch ein exzentrisches Einleiten des Prozesswassers in eine entsprechende Verteilerkammer erzielt werden. Insbesondere kann ein Einlass für das Prozesswasser der nicht rotierenden Wasserzufuhr tangential an der Einlasskammer platziert werden, so dass die Strömungsrichtung in der Einlasskammer identisch mit der Drehrichtung des Messerkopfs ist. Im weiteren Verlauf strömt das Prozesswasser dann aus der Einlasskammer in axialer Richtung auf die Lochplatte zu, so dass der genannten Umlaufbewegung eine Axialkomponente überlagert wird, so dass sich insgesamt eine drallartige bzw. schraubenartige Prozesswasserströmung ergibt. Alternativ oder zusätzlich kann aber auch die zumindest eine oder die mehreren Auslassöffnungen entsprechend geneigte Mündungsbereiche aufweisen, um das Prozesswasser beispielsweise spitzwinklig geneigt zur Lochplatte in die Schneidkammer einzuleiten.

In Weiterbildung der Erfindung können im Schneidkammergehäuse zumindest zwei separate Verteilerkammern vorgesehen sein, von denen eine die schon genannte ringförmige Verteilerkammer ist, deren eine oder mehrere Auslassöffnungen frontal zur Lochplatte direkt in die Schneidkammer führen, und von denen eine weitere Verteilerkammer mit dem/den einen oder mehreren mitrotierenden Messerkopfkanälen strömungsverbunden ist, beispielsweise durch ein Zuleitungsrohr, das sich parallel neben der Messerkopfdrehachse oder koaxial zur genannten Messerkopfdrehachse erstrecken kann, um das frische Prozesswasser zu dem einen oder mehreren Messerkopfkanälen zu führen.

Der genannte zumindest eine Messerkopfkanal kann zumindest näherungsweise parallel zur Messerkopfdrehachse und/oder senkrecht auf die Lochplatte münden. Alternativ kann der zumindest eine Messerkopfkanal aber auch schräg geneigt zur Lochplatte münden, beispielsweise in einer die Messerkopfdrehachse enthaltenen, radialen Ebene schräg nach außen zur Lochplatte hin münden. Alternativ oder zusätzlich kann der zumindest eine Messerkopfkanal auch in Umfangsrichtung geneigt angeordnet sein, insbesondere derart, dass das aus dem Messerkopfkanal austretende Prozesswasser eine Bewegungskomponente in Umfangsrichtung entsprechend der Messerkopfdrehrichtung erhält. Grundsätzlich ist es auch bei der Prozesswasserzuführung durch den Messerkopf hindurch möglich, das Prozesswasser einer Einlasskammer über einen tangentialen Einlasskanal zuzuführen, so dass das Prozesswasser in der Einlasskammer eine Umfangsbewegung entsprechend der Messerkopfdrehung ausführt, und das Prozesswasser dann strömungstechnisch günstig durch den mitrotierenden Messerkopfkanal in axialer Richtung auf die Lochplatte zuströmen kann.

In Weiterbildung der Erfindung können mehrere Messerkopfkanäle voneinander beabstandet angeordnet sein, insbesondere in einem ringförmigen Bereich um die Messerkopfdrehachse herum angeordnet sein. Der genannte Ringbereich kann innerhalb der Messer des Messerkopfes und/oder in Nachbarschaft zu den Messern des Messerkopfes angeordnet sein, so dass die mitrotierenden Strömungspfade Prozesswasser in den stirnseitigen Spaltbereich zwischen Lochplatte und Messerkopf innerhalb der Messer des Messerkopfes leiten.

Insbesondere können die Messerkopfkanäle unmittelbar innerhalb der Schneidmesser des Messerkopfes auf der der Lochplatte zugewandten Messerkopfstirnseite münden. Hierdurch kann das über die Messerkopfkanäle zugeführte Prozesswasser von den Messern zerteiltes Granulat aus dem stirnseitigen Spaltbereich zwischen Messerkopf und Lochplatte ausspülen und verhindern, dass sich Granulat im zentralen stirnseitigen Spaltbereich zwischen Messerkopf und Lochplatte ansammelt. Insbesondere kann über die mitrotierenden Strömungspfade eine Prozesswasserströmung erzeugt werden, die parallel zur Lochplatte aus dem Zentralbereich des stirnseitigen Spalts an den Messern vorbei nach außen strömen und dabei die Pellets bzw. das Granulat mitnimmt.

Die beiden genannten Verteilerkammern können in Weiterbildung der Erfindung jeweils ringförmig ausgebildet sein und an der Schneidkammer-Stirnseite positioniert sein, die der Lochplatte gegenüberliegt. Da die beiden Verteilerkammern unterschiedliche Auslassöffnungen beschicken, können die beiden ringförmigen Verteilerkammern unterschiedliche Durchmesserbereiche, insbesondere sich nicht überlappende Durchmesserbereiche aufweisen. Insbesondere können die beiden ringförmigen Verteilerkammern ineinanderliegend ausgebildet sein, so dass eine Verteilerkammer kleineren Durchmessers innerhalb einer Verteilerkammer größeren Durchmessers liegt. Dabei kann insbesondere die die Messerkopfkanäle beschickende ringförmige Verteilerkammer innerhalb der ringförmigen Verteilerkammer angeordnet sein, die über feststehende Auslassöffnungen direkt in die Schneidkammer, d.h. nicht über den Messerkopf in die Schneidkammer mündende Auslassöffnungen besitzt.

Die genannte ringförmige Verteilerkammer, die über feststehende Auslassöffnungen direkt in die Schneidkammer mündet, kann in Weiterbildung der Erfindung einen tangential zur Umfangswandung der Verteilerkammer und/oder schräg zur Radialrichtung geneigten Zulauf besitzen, so dass das in die ringförmige Verteilerkammer strömende Prozesswasser in der Verteilerkammer eine umlaufende Strömung bildet bzw. in der ringförmigen Verteilerkammer spiralförmig und/oder der Umfangswandung folgend herumströmen, bevor das Prozesswasser über die genannte zumindest eine Auslassöffnung frontal auf die Lochplatte zu in die Schneidkammer strömt.

In Weiterbildung der Erfindung kann der genannte Zulauf insbesondere derart geneigt und/oder tangential angestellt sein, dass das Prozesswasser in der Verteilerkammer eine Drehrichtung besitzt und/oder beim Eintritt in die Schneidkammer eine Strömungsrichtung mit einer Komponente hat, die der Drehrichtung des Messerkopfs entspricht. Mit anderen Worten kann der Zulauf in der Verteilerkammer eine spiralförmige Strömung erzeugen, deren Drehrichtung der Drehrichtung des Messerkopfs entspricht.

Alternativ oder zusätzlich kann in ähnlicher Weise auch die ringförmige Verteilerkammer, die den mitdrehenden Strömungspfad speist bzw. die Messerkopfkanäle beschickt, einen Zulauf aufweisen, der tangential zur Umfangswandung ausgerichtet und/oder geneigt zur Radialrichtung angeordnet ist, um in der genannten ringförmigen Verteilerkammer eine umlaufende Prozesswasserströmung zu erzeugen bzw. das Prozesswasser spiralförmig in der Verteilerkammer herumströmen zu lassen, insbesondere in einer Drehrichtung, die der Drehrichtung des Messerkopfs entspricht. Hierdurch kann die Beschickung der Messerkopfkanäle effizienter gestaltet werden.

In vorteilhafter Weiterbildung der Erfindung kann das Strömungsverhältnis beispielsweise in Form des Mengenverhältnisses und/oder des Druckverhältnisses und/oder das Temperaturverhältnis der Prozesswasserströme, die über die beiden separaten Strömungspfade zugeführt werden, d.h. die Prozesswasserströme, die den mitrotierenden Strömungspfad einerseits und den nicht mitrotierenden Strömungspfad beschicken, variabel eingestellt und/oder geregelt werden. Insbesondere kann die Strömungsmenge und/oder der Druck und/oder die Temperatur des Prozesswassers, das dem mitrotierenden Strömungspfad zugeführt wird, unabhängig von dem den anderen Strömungspfad beschickenden Prozesswasser individuell eingestellt und/oder geregelt werden. Alternativ oder zusätzlich kann auch die Strömungsmenge und/oder der Druck und/oder die Temperatur des Prozesswassers, das über den feststehenden zumindest einen Auslass direkt in die Schneidkammer geführt wird, unabhängig von dem Prozesswasser, das den mitrotierenden Strömungspart beschickt, individuell eingestellt und/oder geregelt werden.

Alternativ oder zusätzlich kann auch die Verteilung zwischen den beiden Strömungspfaden eingestellt werden und/oder der gesamte Volumenstrom aufeinander abgestimmt eingestellt bzw. geregelt werden.

Um die Verweilzeit der Pellets in der Schneidkammer zu vergleichmäßigen sowie ein mehrfaches Umlaufen schon geschnittener Pellets zu vermeiden, kann nach einem weiteren Aspekt der vorliegenden Erfindung unabhängig von den genannten mehreren Strömungspfaden für das Prozesswasser die Schneidkammer mit einer speziellen Geometrie ausgebildet werden. Insbesondere kann die Schneidkammer derart konturiert werden, dass das von der Schneidkammer um die Schneidmesser herum definierte Hüllvolumen, in dem sich das Prozesswasser sozusagen ausbreiten kann, in Umlaufrichtung des Messerkopfs betrachtet zum Auslauf hin größer wird. Insbesondere kann in einem Sektor der Schneidkammer, den die Schneidmesser gleich nach Passieren des Auslasses erreichen, das besagte Hüllvolumen der Schneidkammer um die Messer herum minimal sein, sich dann zunehmend vergrößern und zum Auslass hin maximal werden.

Dabei kann sich die Schneidkammer in Umlaufrichtung betrachtet nach Art eines Schneckenhauses in Umlaufrichtung betrachtet in der Tiefe und/oder in der Breite vergrößern, insbesondere ausgehend von einem Bereich, der in Umlaufrichtung des Messerkopfs betrachtet unmittelbar hinter dem Auslass liegt, zum Auslass hin. Die Tiefe der Schneidkammer meint dabei deren Erstreckung in Axialrichtung bzw. in Richtung der Messerkopfdrehachse. Breite meint dabei der Umfangswandung der Schneidkammer und der Hüllkontur der Messer des Schneidkopfs bzw. des Schneidkopfs selbst, je nachdem, wie die Messer angeordnet sind.

Insbesondere kann die Schneidkammer entlang ihres Außenumfangs und somit benachbart zu den Schneidmessern des Messerkopfs bzw. benachbart zum Außenumfang des Messerkopfs einen schlauchförmigen Volumenbereich definieren, der vom Sektor der Schneidkammer, den die Messer nach Passieren des Auslasses erreichen, zum Auslass hin kontinuierlich oder ggf. auch stufenweise größer werden kann.

Durch einen sich zum Auslass hin vergrößernden Volumenschlauch um die Schneidmesser herum kann die Verweilzeit der Pellets deutlich vergleichmäßigt werden. In dem Bereich kleinsten Spaltmaßes bzw. in dem Sektor, der in Umlaufrichtung gleich nach dem Auslass liegt und um den Messerkopf herum eng ausgebildet ist, hat das einströmende Spül-Prozesswasser wenig Platz, sich auszubreiten, so dass hier höhere Drücke entstehen und hierdurch höhere Strömungsgeschwindigkeiten des Prozesswassers erreicht werden. Hierdurch können die dort geschnittenen Pellets deutlich schneller ausgespült werden.

Zum anderen ist es so, dass in Umlaufrichtung des Messerkopfs betrachtet, mit zunehmender Nähe zum Auslass immer mehr Pellets zwischen den Schneidmessern bzw. um die Schneidmesser herum angehäuft werden, da zum einen die in Umlaufrichtung betrachtet weiter vorne schon geschnittenen Pellets mit transportiert werden und die in sozusagen stromab liegenden Sektoren frisch geschnittenen Pellets dazu kommen.

In den, bei Betrachtung der Umlaufrichtung des Messerkopfs, näher zum Auslass liegenden Sektoren wird die Schneidkammer um den Messerkopf herum voluminöser, so dass das Prozesswasser mehr Platz hat und/oder der Druck des Prozesswassers abnimmt und/oder die Strömungsgeschwindigkeit des Prozesswassers abnimmt, so dass insgesamt betrachtet die Verweilzahl der in unterschiedlichen Umlaufsektoren geschnittenen Pellets vergleichmäßigt wird.

Um ein mehrfaches oder gar endloses Umlaufen geschnittener Pellets zu verhindern, kann in vorteilhafter Weiterbildung der Erfindung im Bereich des Auslaufs ein Strömungsleitblech und/oder ein Deflektor in der Schneidkammer angeordnet werden, um mit dem Prozesswasser mitströmende Pellets gezielt in den Auslass zu lenken. Ein solches Leitblech und/oder ein schalen- oder panelförmiger Deflektor kann sich insbesondere zwischen der Außenkontur des Messerkopfs bzw. der Hüllkontur der Schneidmesser und dem Auslass erstrecken, wobei sich das Leitblech bzw. der Deflektor insbesondere von einer Umfangswandung der Schneidkammer aus benachbart zur Hüllkontur des Messerkopfs entgegen dessen Umlaufrichtung in die Schneidkammer hineinragen kann, von einem Abschnitt der Umfangswandung der Schneidkammer auskragend erstreckend, die in Umlaufrichtung des Messerkopfs betrachtet die hintere Randkontur zum Auslass hin definiert.

Beispielsweise kann sich das Leitblech bzw. der Deflektor bogenförmig gekrümmt um die Hüllkontur des Messerkopfs herum erstrecken und in der genannten Weise vom Wurzelbereich des Auslasses auskragen.

In vorteilhafter Weiterbildung kann das Schneidkammergehäuse teilbar ausgebildet sein, um die Schneidkammer und/oder den Messerkopf durch Wegfahren eines Schneidkammergehäuseteils von einem anderen Schneidkammergehäuseteil freizulegen, um Reinigungsarbeiten oder Wartungsarbeiten vornehmen zu können. In vorteilhafter Weiterbildung der Erfindung kann das Schneidkammergehäuse dabei einen feststehenden Gehäuseteil umfassen, der fest an der Lochplatte montiert sein kann und/oder fest mit der Lochplatte verbunden sein kann, auch wenn das Schneidkammergehäuse geöffnet wird. Ein beweglicher Gehäuseteil bzw. zu öffnender Gehäuseteil kann eine Lagerung für den Messerkopf aufweisen und/oder an einem Messerkopfantrieb abgestützt sein und/oder zusammen mit dem Messerkopf von der Lochplatte wegfahrbar und auf die Lochplatte zufahrbar gelagert sein. Insbesondere kann der bewegliche Gehäuseteil dazu ausgebildet sein, zusammen mit dem Messerkopf von der Lochplatte und dem feststehenden Gehäuseteil weggefahren werden zu können, um die Schneidkammer zu öffnen.

Unabhängig von der Zuordnung der Granuliererkomponenten zu den genannten Gehäuseteilen können die genannten Gehäuseteile derart ausgebildet sein, dass das bewegliche Gehäuseteil translatorisch linear von dem feststehenden Gehäuseteil wegbewegt bzw. translatorisch linear auf das feststehende Gehäuseteil zubewegt werden kann. Insbesondere kann das bewegliche Gehäuseteil in Richtung der Drehachse des Messerkopfs von dem feststehenden Gehäuseteil wegbewegt und auf das bewegliche Gehäuseteil zubewegt und damit verbunden werden. Die Kupplungsrichtung der beiden Gehäuseteile kann im Wesentlichen parallel zur Drehachse des Messerkopfs ausgerichtet sein.

Insbesondere kann die Schnitt- bzw. Verbindungsstelle zwischen den beiden zueinander beweglichen Gehäuseteilen derart beschaffen sein, dass die Schnitt- bzw. Verbindungsstelle durch eine translatorische Bewegung der beweglichen Gehäusehälfte in Richtung der Drehachse des Messerkopfs zusammenfügbar und trennbar ist.

Die genannte Schnitt- bzw. Verbindungsstelle zwischen den beiden zueinander beweglichen Gehäuseteilen kann sich vorteilhafterweise zumindest überwiegend in einer schrägen Ebene erstrecken, die zur Messerkopfdrehachse spitzwinklig geneigt angestellt ist. Dabei müssen sich nicht die gesamten Konturen der Schnitt- bzw. Verbindungsstelle in einer gemeinsamen Ebene befinden, sondern es kann beispielsweise eine U-förmige Schnittstellenkontur in einer Ebene vorgesehen sein, deren fehlendes Schlussstück beispielsweise in Form eines weiteren Schnittstellensektors in einer dazu abgewinkelten Ebene sich erstrecken kann oder einen stufenförmigen Sprung aufweisen kann oder sich auch entlang einer Freiformfläche erstrecken kann. Betrachtet man die genannte Schnittstelle zwischen den beiden Gehäuseteilen insgesamt, kann sich die Schnittstelle, grob gesprochen, zumindest überwiegend in einer schräggestellten Ebene erstrecken.

Insbesondere kann die schräg angestellte Schnittstellenebene in einem unteren Abschnitt näher bei der Lochplatte liegen als in einem oberen Abschnitt. Mit anderen Worten erstreckt sich die Schnittstelle von unten nahe bei der Lochplatte nach oben weiter von der Lochplatte weg.

Ungeachtet der konkreten Konturierung kann sich die Schnittstelle zwischen den beiden an- und abkuppelbaren Gehäuseteilen im Bereich der Schneidkammer erstrecken und/oder über die Verteilerkammern für das Prozesswasser hinwegerstrecken, sodass beispielsweise zumindest ein Teil der ringförmigen Verteilerkammer zur direkten Beschickung der Schneidkammer in dem wegfahrbaren Gehäuseteil ausgebildet und ein anderer Teil in dem feststehenden Gehäuseteil ausgebildet sein kann. Alternativ oder zusätzlich kann auch die Verteilerkammer zur Beschickung des mitrotierenden Strömungspfad teilweise in der einen Gehäusehälfte und teilweise in dem anderen Gehäuseteil ausgebildet sein, wobei es alternativ hierzu auch vorteilhaft sein kann, wenn die Verteilerkammer zur Beschickung des mitrotierenden Strömungspfads vollständig in einem der genannten Gehäuseteile ausgebildet ist, insbesondere in dem beweglichen Gehäuseteil, welches zusammen mit dem Messerkopf von der Lochplatte und dem damit verbundenen Gehäuseteil wegbewegt werden kann.

Die beiden genannten, feststehenden und beweglichen Gehäuseteile können jeweils Gehäusehälften bilden, sodass das Gehäuse insgesamt in zwei Gehäuseteile auseinandergefahren werden kann. Grundsätzlich wäre es aber auch möglich, eine Drei- oder Vierteilung oder Mehrteilung vorzusehen und mehrere bewegliche Gehäuseteile von einem oder mehreren feststehenden Gehäuseteilen wegfahrbar zu gestalten.

In vorteilhafter Weiterbildung der Erfindung kann der Abfluss für das Prozesswasser-Granulat-Gemisch aus der Schneidkammer dem feststehend an der Lochplatte montierten Gehäuseteil zugeordnet sein. Unabhängig hiervon können einer oder zwei oder alle Einlässe, über die das Prozesswasser in die Schneidkammer zugeführt werden kann, an der beweglichen Gehäusehälfte vorgesehen sein, um mit der beweglichen Gehäusehälfte von der feststehenden Gehäusehälfte wegbewegt werden zu können.

Insbesondere kann in Weiterbildung der Erfindung der Auslass für das Prozesswasser-Granulat-Gemisch an einer oberen Gehäusehälfte angeordnet sein, während die Einlässe zur Zuführung des frischen Prozesswassers in die Schneidkammer einer unteren Gehäusehälfte zugeordnet sein können.

Zwischen den kuppelbaren Gehäuseteilen kann in vorteilhafter Weise eine Dichtung vorgesehen sein, die beispielsweise eine Ringdichtung umfassen kann, die sich entlang der Schnittstelle zwischen den beiden Gehäuseteilen erstrecken kann. Beispielsweise kann ein elastischer O-Ring zwischen den trennbaren Gehäuseteilen vorgesehen sein, um diese im aneinander gekuppelten Zustand wasser- bzw. fluiddicht abzudichten. Die genannte Dichtung an der Schnittstelle der beiden Gehäuseteile kann insbesondere dazu vorgesehen sein, die Schneidkammer wasserdicht zu machen, sodass das Prozesswasser nur an den Ein- und Auslässen in die Schneidkammer eintreten bzw. aus dieser austreten kann.

Um ein einfaches, rasches An- und Abkuppeln bei ausreichender Dichtigkeit der Schnittstelle zu erzielen, kann zwischen den beiden zueinander beweglichen Gehäuseteilen eine Spannvorrichtung vorgesehen sein, mittels derer die beiden Gehäuseteile im aneinander gekuppelten Zustand aufeinandergespannt bzw. -gepresst werden können.

Eine solche Spannvorrichtung kann vorteilhafterweise dazu ausgebildet sein, eine Spannkraft zumindest näherungsweise parallel zur Drehachse des Messerkopfes aufzubringen und/oder die beiden Gehäuseteile in Richtung der Drehachse des Messerkopfs aufeinanderzuspannen.

Vorteilhafterweise kann die Spannvorrichtung einen oder mehrere Schnellspanner aufweisen, beispielsweise in Form beweglicher Spannhebel und/oder Druckmittel betätigbarer Spannzylinder. Alternativ oder zusätzlich können aber auch Spannschrauben Verwendung finden.

In vorteilhafter Weiterbildung der Erfindung können über den Umfang der Gehäuseteile verteilt angeordnete hydraulische Spannzylinder vorgesehen sein, die mit einem Gegenstück am gegenüberliegenden Gehäuseteil zusammenwirken, beispielsweise dort verriegelt oder eingehängt oder fixiert werden können. Durch hydraulische Betätigung der Spannzylinder können die Gehäuseteile dann form- und kraftschlüssig gegeneinander gespannt werden, um die gewünschte Dichtung zu erzielen.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Darstellung eines Unterwassergranulierers, dessen Schneidkammergehäuse, dessen Messerkopf-Antriebsvorrichtung und die Prozesswasseranschlüsse des Schneidkammergehäuses zum Durchspülen der Schneidkammer mit Prozesswasser zeigen,
- Fig. 2:: einen Längsschnitt durch das Schneidkammergehäuse des Unterwassergranulierers aus Fig. 1, der den an die Lochplatte angestellten Messerkopf und die Strömungspfade des Prozesswassers zum Durchspülen der Schneidkammer zeigt,
- Fig. 3:: eine Seitenansicht des Schneidkammergehäuses des Unterwassergranulierers aus den vorhergehenden Figuren in einer geöffneten, auseinandergefahrenen Stellung der beiden Gehäuseteile des Schneidkammergehäuses, wobei der mit dem beweglichen Gehäuseteil weggefahrene Messerkopf und die hydraulischen Spannzylinder zum Verbinden der beiden Gehäuseteile zu sehen sind,
- Fig. 4:: eine Querschnittsansicht der Schneidkammer des Unterwassergranulierers aus den vorhergehenden Figuren in einer Blickrichtung aus der Lochplatte heraus auf den Messerkopf, wobei die Mündungsbereiche der durch den Messerkopf hindurchführenden Strömungspfade sowie die exzentrische Ausbildung der Schneidkammer um den Messerkopf herum zu sehen ist,

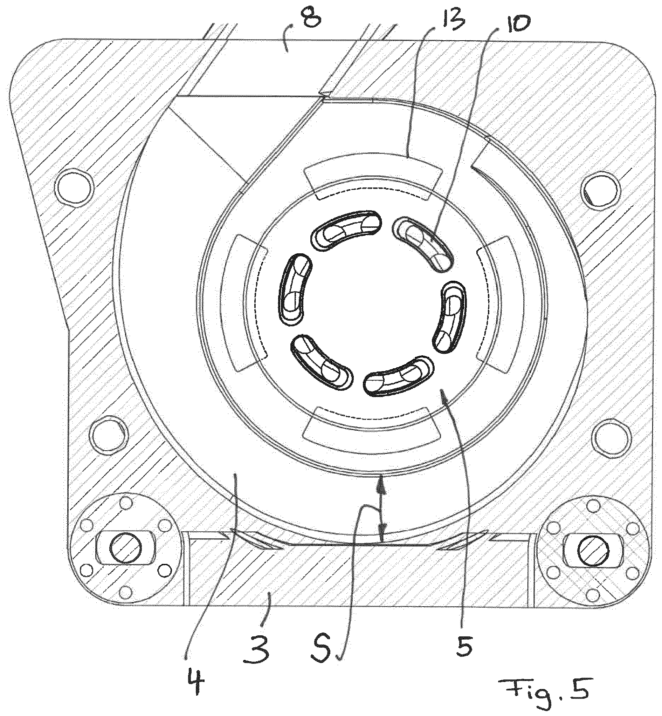

- Fig. 5:: eine Schnittansicht der Schneidkammer des Unterwassergranulierers aus den vorhergehenden Figuren in einer im Vergleich zur Figur 4 umgedrehten Blickrichtung sozusagen auf die Rückseite des Messerkopfs, wobei die Mündungsbereiche der direkt in die Schneidkammer führenden Prozesswasserauslasses und die exzentrische Anordnung des Messerkopfs in der Schneidkammer zu sehen sind,

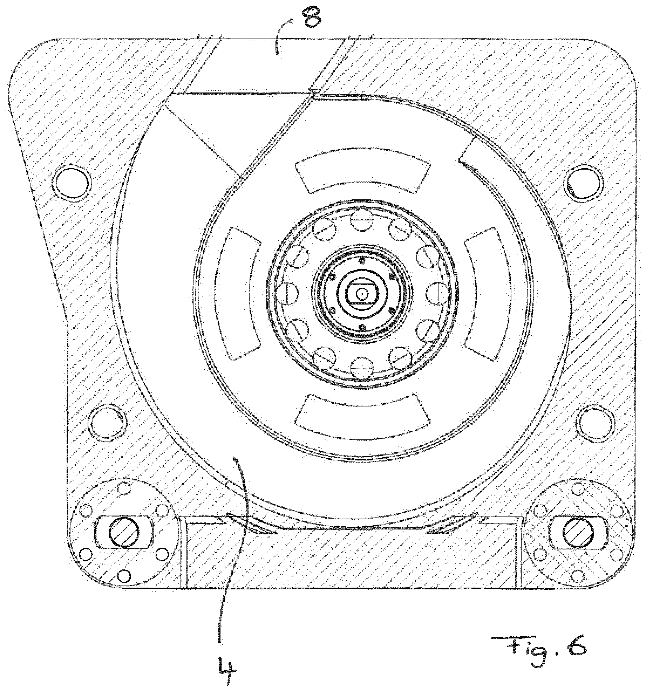

- Fig. 6:: eine weitere Schnittansicht der Schneidkammer des Unterwassergranulierers ähnlich Figur 5 in einer im Vergleich dazu axial versetzten Schnittebene,

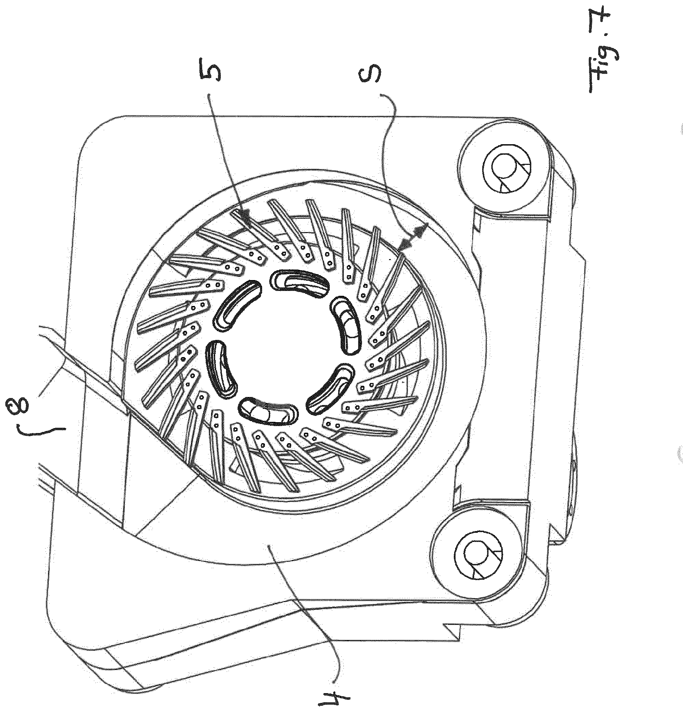

- Fig. 7:: eine perspektivische Darstellung der Schneidkammer mit dem darin angeordneten Messerkopf, die die dreidimensionale Konturierung der Schneidkammer mit den sich zum Auslass hin vergrößernden Querschnittsvolumen der Schneidkammer zeigt, und
- Fig. 8:: eine perspektivische Darstellung der Schneidkammer mit dem darin angeordneten Messerkopf ähnlich Fig. 7, wobei im Vergleich zur Fig. 7 ein am Auslass der Schneidkammer angeordnetes Leitblech zu sehen ist, dass ein mehrfaches Umlaufen geschnittener Pellets verhindert.

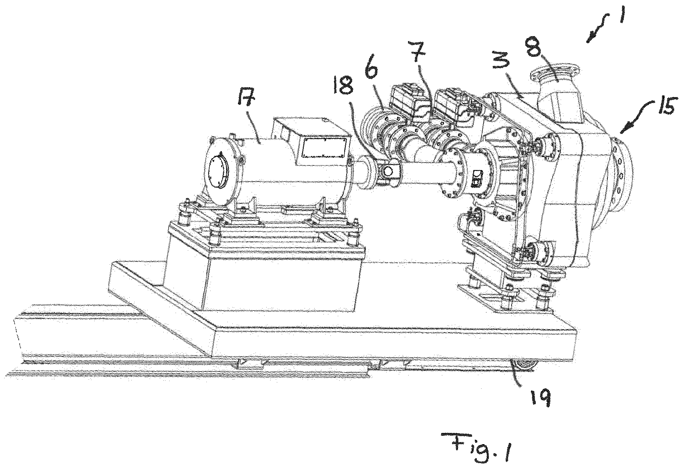

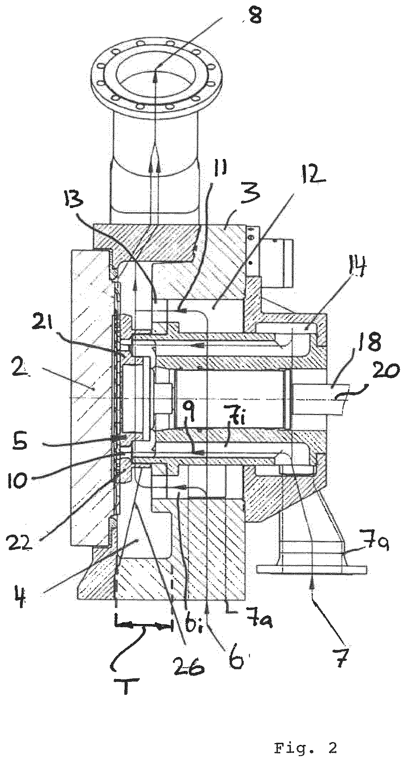

Wie Figur 1 zeigt, umfasst der Unterwassergranulierer 1 einen Schmelzezuführkopf 15, der an eine nicht dargestellte Schmelzezufuhreinrichtung beispielsweise umfassend einen Extruder angeschlossen werden kann, wobei der genannte Schmelzezuführkopf 15 eine Lochplatte 2 umfasst bzw. damit verbunden werden kann, die düsenartige Schmelzekanäle umfasst, um Schmelzestränge durch die Lochplatte hindurchdrücken bzw. aus der Lochplatte austreten lassen zu können. Die genannten Schmelzekanäle der Lochplatte können auf einer Stirnseite der Lochplatte 2 münden, die die Schneidfläche 23 bildet und einem Messerkopf 5 zugewandt ist, vgl. Fig. 2.

Die genannte Lochplatte 2 ist dabei mit einem Schneidkammergehäuse 3 verbunden, das eine Schneidkammer 4 umschließt, die an die genannte Stirnseite der Lochplatte 2 angrenzt, die die Schneidfläche der Lochplatte 2 bildet. Die genannte Stirnseite der Lochplatte 2 begrenzt dabei die Schneidkammer 4 auf einer Stirnseite, während das Schneidkammergehäuse 3 die Schneidkammer 4 umfangsseitig und auf einer der Lochplatte 2 gegenüberliegenden Stirnseite begrenzen kann.

In der genannten Schneidkammer 4 ist ein Messerkopf 5 aufgenommen, der rotatorisch um eine Messerkopfdrehachse antreibbar ist, wobei sich die genannte Messerkopfdrehachse im Wesentlichen senkrecht zu der Schneidfläche der Lochplatte 2 erstrecken kann.

Zum rotatorischen Antreiben des Messerkopfs 5 ist ein Messerkopfantrieb 16 vorgesehen, vgl. Fig. 1, der beispielsweise einen Elektromotor 17 oder auch einen Hydraulikmotor umfassen kann, der mit dem Messerkopf 5 ggf. über eine Getriebestufe und eine Antriebswelle 18 antreibend verbunden sein kann, vgl. Fig. 1.

Die Baugruppe umfassend den Messerkopf 5, den Messerkopfantrieb 16 und das Schneidkammergehäuse 3 bzw. zumindest einen Teil des Schneidkammergehäuses 3 kann auf einem Lagerschlitten 19 translatorisch verfahrbar gelagert sein, insbesondere in einer Richtung zumindest näherungsweise parallel zur Messerkopfdrehachse 20.

Wie Fig. 2 zeigt, kann die Schneidkammer 4 insgesamt betrachtet zumindest näherungsweise zylindrisch oder scheibenförmig konturiert sein und auf einer Seite der Lochplatte 2 sitzen, sodass der Messerkopf 5 in der Schneidkammer 4 aufgenommen sein kann.

Der genannte Messerkopf 5 umfasst dabei einen Messerträger 21, an dem stirnseitig und/oder außenumfangsseitig Messer 22 angeordnet sind, die über die Lochplatte 22 streichen, und zwar insbesondere in einem ringförmigen Bereich, in dem die zuvor genannten Schmelzekanäle der Lochplatte 2 auf deren stirnseitiger Schneidfläche münden. Hierdurch können die Messer 22 die aus den Schmelzekanälen austretenden Schmelzestränge abschlagen und zu Granulat zerteilen.

Die genannte Schneidkammer 4 wird dabei von Prozesswasser durchspült, das über mehrere Einlässe 6, 7 der Schneidkammer 4 zugeführt und zusammen mit dem zerteilten Granulat in Form eines Prozesswasser-Granulat-Gemischs über einen Auslass 8 abgeführt wird, vgl. Fig. 2.

Der genannte Auslass 8 kann dabei an einer Oberseite des Schneidkammergehäuses 2 angeordnet sein und tangential aus der Umfangswandung der Schneidkammer 4 herausführen und/oder schräg geneigt zur Radialrichtung am Umfang der Schneidkammer 4 angeordnet sein, vgl. Fig. 1 und Fig. 2.

Die Schrägstellung des genannten Auslasses 8 kann dabei an die Drehrichtung des Messerkopfs 5 angepasst sein, derart, dass in der Schneidkammer 4 spiralförmig umströmendes Prozesswasser bzw. an der Umfangswandung der Schneidkammer 4 entlangströmendes Prozesswasser ohne größere Richtungsumleitungen bzw. ohne Richtungsumkehr tangential an der Umfangsseite abströmen kann.

Die genannten Einlässe 6, 7 zum Zuführen des Prozesswassers können an einer Unterseite des Schneidkammergehäuses 3 und/oder im Bereich einer unteren Hälfte des Schneidkammergehäuses 3 angeordnet sein, vgl. Fig. 1 und Fig. 2.

Über die genannten Einlässe 6, 7 wird das Prozesswasser entlang verschiedener Strömungspfade in die Schneidkammer 4 geführt.

Wie Fig. 2 zeigt, führen beide Einlässe 6, 7 von einer rückseitigen Stirnseite her in die Schneidkammer 4, d.h. von der Stirnseite der Schneidkammer 4, die der Lochplatte 2 gegenüberliegt. Dabei ist einer der Einlässe 7 mehr zentral, d.h. näher zur Rotationsachse 20 des Messerkopfs 5 und der andere Einlass 6 weniger zentral bzw. stärker exzentrisch, d.h. weiter von der Drehachse 20 des Messerkopfs 5 beabstandet angeordnet.

Insbesondere ist der genannte Einlass 7 derart angeordnet und ausgerichtet, dass aus dem Einlass 7 in die Schneidkammer 4 austretendes Prozesswasser direkt auf eine rückseitige Stirnseite des Messerkopfs 5 geleitet wird. In dem besagten Messerkopf 5 sind Messerkopfkanäle 10 ausgebildet, die auf der lochplattenseitigen Stirnseite des Messerkopfs 5 münden, sodass das Prozesswasser durch den Messerkopf 5 hindurchströmen und frontal auf die Lochplatte 2 strömen kann.

Die genannten Messerkopfkanäle 10 sind dabei in einem Ringbereich bzw. in einem Durchmesserbereich radial innerhalb des Durchmesserbereiches vorgesehen, in welchem die Messer 22 angeordnet sind, sodass das Prozesswasser in den stirnseitigen Spalt zwischen Lochplatte 2 und Messerkopf 5 innerhalb der Messer 22 gelangt. Hierdurch bildet sich zwischen der Lochplatte 2 und dem Messerkopf 5 eine Prozesswasserströmung aus, die im Wesentlichen parallel zur Lochplatte 2 verläuft und zumindest näherungsweise radial nach außen strömt, sodass an den Messern 20 abgeschlagenes Granulat nach außen in die Schneidkammer 4 ausgespült wird.

Der genannte Einlass 7 beschickt den von den Messerkopfkanälen 10 gebildeten mitrotierenden Strömungspfad 9, der in einen zentralen Bereich des stirnseitigen Spalts zwischen Lochplatte 2 und Messerkopf 5 führt und dort eine vom Zentrum nach außen bildende, parallel zur Lochplatte 2 verlaufende Strömung bildet, um zu verhindern, dass sich im Zentralbereich Granulat anhäuft.

Wie Fig. 2 zeigt, kann der genannte Einlass 7 einen Ringkanal bilden, der um die Antriebswelle 18 herum verläuft, insbesondere koaxial zur Messerkopfachse 20 ausgerichtet sein kann.

Wie Fig. 2 zeigt, kann der genannte Einlass 7 auf der Außenseite des Schneidkammergehäuses 3 einen Einlassstutzen 7a bzw. einen Einlassanschluss zum Anschließen einer Prozesswasserleitung aufweisen, die in eine ringförmige Verteilerkammer 12 mündet, die im Inneren des Schneidkammergehäuses 3 ausgebildet ist und mit dem ringförmigen Einlasskanal 7i kommuniziert, der das Prozesswasser auf die Rückseite des Messerkopfs 5 leitet bzw. die genannten Messerkopfkanäle 10 beschickt.

Der andere Einlass 6 umfasst ebenfalls einen auf der Außenseite des Schneidkammergehäuses 3 vorgesehenen Einlassstutzen 6a bzw. -anschluss zum Anschließen einer Prozesswasserleitung. Dieser weitere Einlass 6 leitet das Prozesswasser aber nicht durch den Messerkopf 5 hindurch, sondern am Messerkopf 5 vorbei direkt in die Schneidkammer 4 ein und beschickt insofern einen nicht mitrotierenden Strömungspfad 11.

Insbesondere kann der genannte weitere Einlassstutzen 6a zunächst mit einer weiteren ringförmigen Verteilerkammer 12 kommunizieren, die im Inneren des Schneidkammergehäuses 3 ausgebildet ist und hinter bzw. angrenzend an die Stirnseite der Schneidkammer 4 vorgesehen ist. Die genannte ringförmige Verteilerkammer 12 kann um den zuvor beschriebenen inneren Einlass 7 herum ausgebildet sein, vgl. Fig. 2 und eine oder mehrere Auslassöffnungen 13 aufweisen, die von der der Lochplatte 2 gegenüberliegenden Stirnseite der Schneidkammer 4 her in die genannte Schneidkammer 4 münden und das Prozesswasser am Außenumfang des Messerkopfs 5 vorbei frontal auf die Lochplatte 2 richten. Wie Fig. 2 zeigt, können die Auslassöffnungen 13 in einem Durchmesserbereich angeordnet sein, der größer ist als der Durchmesser des Messerträgers 21 des Messerkopfs 5 und/oder größer ist als der Durchmesserbereich, in dem die Messerkopfkanäle 10 angeordnet sind und/oder größer sein kann als der Durchmesserbereich, in dem der innere Einlass 7 seinen Mündungsbereich hat.

Insbesondere kann das aus den Auslassöffnungen 13 frontal auf die Lochplatte 22 zuströmende Prozesswasser einen äußeren Bereich der Schneidmesser 22 beströmen bzw. im Bereich der Messer 22 auf die Lochplatte 22 zuströmen und sich dort mit dem Prozesswasser vereinen, das über den mitrotierenden Strömungspfad 9 vom Zentrum der Lochplatte 2 nach außen strömt.

In vorteilhafter Weiterbildung der Erfindung können die Einlässe 6 und 7 hinsichtlich der Strömungsmenge und/oder des Drucks und/oder hinsichtlich der Temperatur des Prozesswassers unabhängig voneinander und/oder aufeinander abgestimmt und/oder jeweils individuell gesteuert bzw. geregelt werden, beispielsweise durch geeignete Strömungssteuereinrichtungen wie Ventile, Mengenteiler oder ggf. auch separate Druckquellen wie Pumpen und/oder Temperiereinrichtungen wie Wärmetauscher oder Heizelemente oder Kühlelemente, sodass für jeden Strömungspfad 9 und 11 die Strömungsmenge und/oder der Strömungsdruck und/oder die Strömungstemperatur im Bereich des jeweiligen Einlasses 6 und 7 in der gewünschten Weise individuell eingestellt werden kann.

Unabhängig von den beschriebenen mehreren Einlässen 6, 7 kann die Schneidkammer 4 einen insgesamt betrachtet schneckenartige, dreidimensionale Konturierung besitzen und/oder der Messerkopf 5 in der Schneidkammer 4 exzentrisch positioniert sein, um den geschnittenen Pellets den Weg in den Auslass 8 zu erleichtern und die Verweilzeiten der in unterschiedlichen Sektoren mit unterschiedlicher Beabstandung vom Auslass 8 geschnittenen Pellets zu vergleichmäßigen.

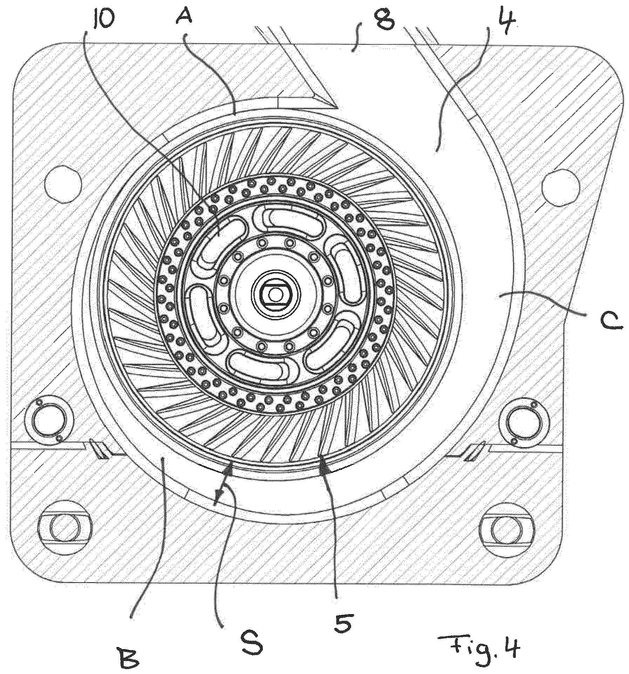

Insbesondere kann die Schneidkammer 4 mit ihrem um die Schneidmesser herum definierten Hüllvolumen, in dem sich das Prozesswasser sozusagen ausbreiten kann, in Umlaufrichtung des Messerkopfs betrachtet zum Auslauf hin größer werden. Bspw. kann in einem Sektor A der Schneidkammer, den die Schneidmesser gleich nach Passieren des Auslasses erreichen, vgl. Figur 4, das besagte Hüllvolumen der Schneidkammer um die Messer herum minimal sein, sich dann zunehmend vergrößern und zum Auslass hin maximal werden. Beispielsweise kann das genannte Hüllvolumen zum Sektor B hin, der dem Auslass 8 gegenüberliegt kontinuierlich zunehmen, und von dort nochmals bis zum Sektor C, der in Messerumlaufrichtung vor dem Auslass 8 liegt, nochmals kontinuierlich zunehmen, vgl. Fig. 4.

Dabei kann sich die Schneidkammer 4 in Umlaufrichtung der Messer betrachtet nach Art eines Schneckenhauses in der Tiefe T und/oder in der Breite S vergrößern, insbesondere ausgehend von dem Bereich A, der in Umlaufrichtung des Messerkopfs betrachtet unmittelbar hinter dem Auslass 8 liegt, zum Auslass 8 hin. Die Tiefe T der Schneidkammer meint dabei deren Erstreckung in Axialrichtung bzw. in Richtung der Messerkopfdrehachse, vgl. Figur 2. Die Breite S meint dabei die Spaltbreite zwischen der Umfangswandung der Schneidkammer 4 und der Hüllkontur der Messer des Schneidkopfs 5 bzw. des Schneidkopfs 5 selbst, je nachdem, wie die Messer angeordnet sind.

Insbesondere kann die Schneidkammer 3 entlang ihres Außenumfangs und somit benachbart zu den Schneidmessern des Messerkopfs 5 bzw. benachbart zum Außenumfang des Messerkopfs 5 einen schlauchförmigen Volumenbereich definieren, der vom Sektor A der Schneidkammer 5, den die Messer nach Passieren des Auslasses 8 erreichen, zum Auslass 8 hin kontinuierlich oder ggf. auch stufenweise größer werden kann. Dieser Volumenschlauch bildet einen Raumbereich, der nicht direkt von den Messern selbst überstrichen wird bzw. an diesen von den Messern überstrichenen Bereich anschließt und sozusagen einen Spiel- bzw. Ausweichraum bildet, in den das den Messerkopf umspülende Prozesswasser um den Messerkopf herum ausweichen kann.

Durch einen sich zum Auslass 8 hin vergrößernden "Volumenschlauch" um die Schneidmesser herum kann die Verweilzeit der Pellets in der Schneidkammer 4 deutlich vergleichmäßigt werden. In dem Bereich kleinsten Spaltmaßes bzw. in dem Sektor A, der in Umlaufrichtung gleich nach dem Auslass 8 liegt und um den Messerkopf 5 herum eng ausgebildet ist, hat das einströmende Spül-Prozesswasser wenig Platz, sich auszubreiten, so dass hier höhere Drücke entstehen und hierdurch höhere Strömungsgeschwindigkeiten des Prozesswassers erreicht werden. Hierdurch können die dort geschnittenen Pellets deutlich schneller ausgespült werden.

Zum anderen ist es so, dass in Umlaufrichtung des Messerkopfs 5 betrachtet, mit zunehmender Nähe zum Auslass 8 immer mehr Pellets zwischen den Schneidmessern bzw. um die Schneidmesser herum angehäuft werden, da zum einen die in Umlaufrichtung betrachtet weiter vorne schon geschnittenen Pellets mittransportiert werden und die in sozusagen stromab liegenden Sektoren frisch geschnittenen Pellets dazu kommen.

In den, bei Betrachtung der Umlaufrichtung des Messerkopfs 5, näher zum Auslass 8 liegenden Sektoren B und C, vgl. Figur 4, wird die Schneidkammer 4 um den Messerkopf 5 herum voluminöser, so dass das Prozesswasser mehr Platz hat und/oder der Druck des Prozesswassers abnimmt und/oder die Strömungsgeschwindigkeit des Prozesswassers abnimmt, so dass insgesamt betrachtet die Verweilzeit der in unterschiedlichen Umlaufsektoren A, B, C geschnittenen Pellets vergleichmäßigt wird.

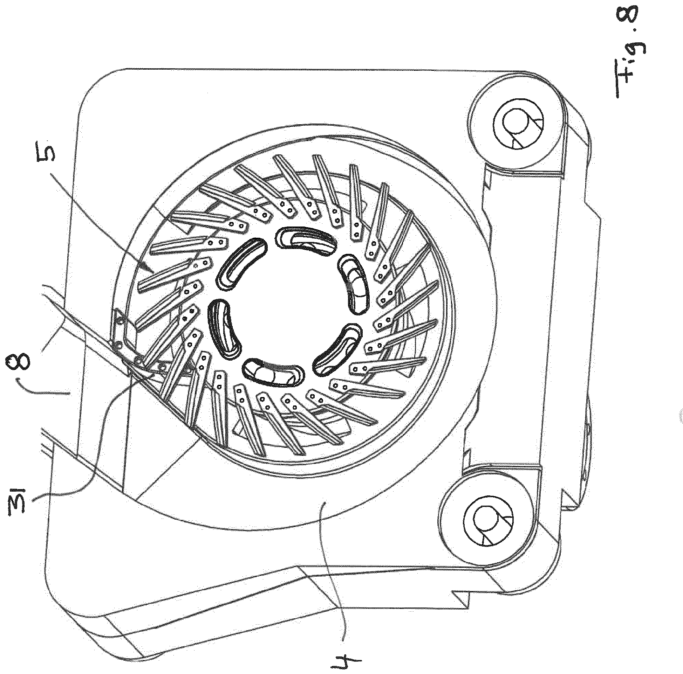

Um ein mehrfaches oder gar endloses Umlaufen geschnittener Pellets zu verhindern, kann in vorteilhafter Weiterbildung der Erfindung im Bereich des Auslaufs 8 bzw. leicht stromab hiervon ein Strömungsleitblech 31 und/oder ein Deflektor in der Schneidkammer 4 angeordnet werden, um mit dem Prozesswasser mitströmende Pellets gezielt in den Auslass zu lenken und am mehrfachen Umlaufen zu hindern, vgl. Figur 8.

Ein solches Leitblech und/oder ein schalen- oder panelförmiger Deflektor kann sich insbesondere zwischen der Außenkontur des Messerkopfs 5 bzw. der Hüllkontur der Schneidmesser einerseits und dem Auslass 8 andererseits erstrecken, wobei das Leitblech 31 bzw. der Deflektor insbesondere von einer Umfangswandung der Schneidkammer 4 aus benachbart zur Hüllkontur des Messerkopfs 5 entgegen dessen Umlaufrichtung in die Schneidkammer 4 hineinragen kann, vgl. Figur 8, beispielsweise sich von einem Abschnitt der Umfangswandung der Schneidkammer 4 auskragend erstreckend, die in Umlaufrichtung des Messerkopfs 5 betrachtet die hintere Randkontur zum Auslass 8 hin definiert, vgl. Figur 8.

Beispielsweise kann sich das Leitblech 31 bzw. der Deflektor bogenförmig gekrümmt und spitzwinklig geneigt zur Hüllkontur des Messerkopfs 5 erstrecken und in der genannten Weise vom Wurzelbereich des Auslasses 8 nach innen unter die Messer auskragen, um mit den Messern umlaufende Pellets "abzufischen" bzw. zum Auslass 8 hin umzulenken und am mehrfachen Umlaufen zu hindern, d.h. zu verhindern, dass sie vom Auslassbereich erneut oder erstmalig in den Sektor A abbiegen, anstatt in den Auslass 8 zu strömen.

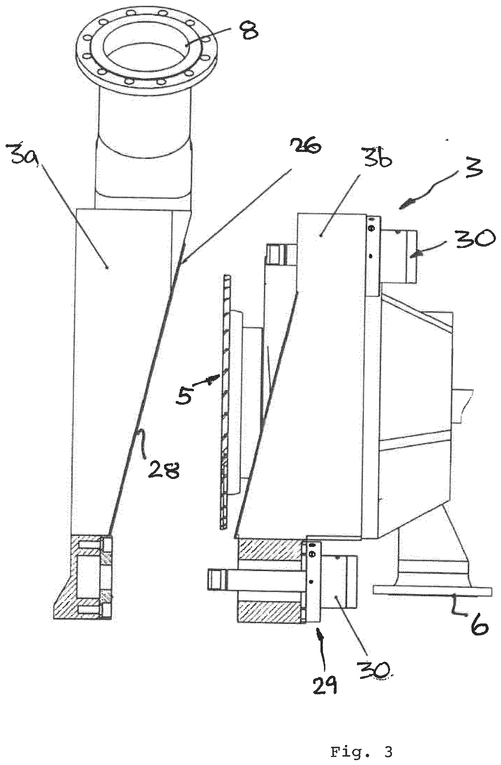

Wie Fig. 3 zeigt, kann das Schneidkammergehäuse 3 vorteilhafterweise geteilt ausgebildet sein und mehrere Gehäuseteile 3a, 3b, beispielsweise zwei Gehäusehälften, umfassen, die aufeinander zubewegt und auseinanderbewegt werden können, um das Schneidkammergehäuse 3 schließen und öffnen zu können. Vorteilhafterweise kann das Schneidkammergehäuse 3 in zwei Gehäusehälften geteilt sein, von denen eine feststehend und die andere beweglich angeordnet ist.

Insbesondere kann das Schneidkammergehäuse 3 zwischen zwei Gehäuseteilen 3a, 3b eine Schnittstelle bzw. Verbindungsstelle 26 aufweisen, die sich zumindest teilweise in einer schrägen Ebene erstreckt, die die Schneidkammer 4 durchdringt, sodass beim Auseinanderbewegen der Gehäuseteile 3a, 3b die Schneidkammer 4 geöffnet wird.

Die genannte Schnittstelle 26 kann sich insbesondere zumindest überwiegend in einer schrägen Ebene erstrecken, die zu einer vertikalen Ebene enthaltend die Messerkopfdrehachse 20 senkrecht stehen kann und gegenüber der genannten Messerkopfdrehachse 20 spitzwinklig geneigt sein kann, insbesondere derart, dass die Schnittstelle 26 an einem unteren Abschnitt des Schneidkammergehäuses 3 näher an der Lochplatte 2 angeordnet ist als an einem oberen Abschnitt des Schneidkammergehäuses 3, vgl. Fig. 3. Die genannte Schnittstelle 26 kann insbesondere am unteren Rand der Schneidkammer 4 näherungsweise an der Lochplatte 2 liegen und an einem oberen Endabschnitt des Schneidkammergehäuses 3 von der Lochplatte 2 weiter beabstandet sein als die Schneidkammer 4 dick ist und/oder sich im Bereich der ringförmigen Verteilerkammer 25, die hinter der Lochplatte 2 gegenüberliegenden Stirnseite der Schneidkammer 4 liegt, erstrecken.

Beispielsweise kann sich die Ebene, in der sich die Schnittstelle 26 größtenteils erstreckt, unter einem Winkel von 45° bis 80° zur Messerkopfdrehachse 20 geneigt erstrecken.

Vorteilhafterweise kann eines der Gehäuseteile 3a feststehend angeordnet sein, insbesondere fest mit der Lochplatte 2 verbunden sein, während ein anderes Gehäuseteil 3b beweglich gelagert sein kann und/oder ein bewegliches Gehäuseteil bilden kann. Insbesondere kann das genannte bewegliche Gehäuseteil 3b translatorisch entlang einer Geraden oder ggf. auch entlang eines bogenförmigen Wegs von dem feststehenden Gehäuseteil 3a entfernt und darauf zubewegt werden. Beispielsweise kann das bewegliche Gehäuseteil 3b parallel zur Messerkopfdrehachse 20 von dem feststehenden Gehäuseteil 3a wegbewegt und darauf zubewegt bzw. an- und abgekuppelt werden.

Das genannte bewegliche Gehäuseteil 3b kann insbesondere zusammen mit dem Messerkopf 5 eine bewegliche Baugruppe bilden. Beispielsweise kann der Messerkopf 5 drehbar an dem beweglichen Gehäuseteil 3b gelagert sein.

Die bewegliche Baugruppe umfassend das bewegliche Gehäuseteil 3b und den Messerkopf 5 kann insbesondere auf einem Schlitten oder einer anderen geeigneten Lagervorrichtung verfahrbar gelagert sein, wobei der Schlitten 19 beispielsweise auch den Messerkopfantrieb 16 tragen kann, vgl. Fig. 1.

Die beiden Gehäuseteile 3a und 3b können dichtend aufeinandergefügt werden, wobei eine Dichtung 28 im Bereich der genannten Schnittstelle 26 vorgesehen sein und zwischen den Rändern der Gehäuseteile an der besagten Schnittstelle sitzen kann. Die genannte Dichtung 28 kann beispielsweise eine ringförmige Dichtung bzw. ein Dichtring sein, beispielsweise in Form eines elastischen Dichtrings oder O-Rings, der zwischen die aufeinander fahrbaren Ränder der Gehäuseteile 3a und 3b gesetzt wird.

Um die Gehäuseteile 3a, 3b fest miteinander verbinden zu können, kann eine Verbindungseinrichtung vorteilhafterweise eine form- und/oder kraftschlüssige Spannvorrichtung 29 umfassen. Eine solche Spannvorrichtung 29 kann vorteilhafterweise mehrere Spanner, insbesondere Schnellspanner 30 umfassen, die entlang der Schnittstelle 27 verteilt angeordnet sein können, um die beiden Gehäuseteile 3a, 3b aufeinander spannen zu können. Die Spannvorrichtung 29 kann dabei eine Spannkraft in Richtung der Bewegungsachse des beweglichen Gehäuseteils aufbringen, beispielsweise in Richtung der Messerkopfdrehachse 20 das bewegliche Gehäuseteil 3b auf das feste Gehäuseteil 3a spannen.

Vorteilhafterweise können die genannten Schnellspanner 30 fremdenergiebetätigbare Spannaktoren beispielsweise in Form von Druckmittelzylindern aufweisen, die an einem der Gehäuseteile gelagert und am gegenüberliegenden Gehäuseteil eingehakt bzw. in anderer Weise formschlüssig gehalten werden können, sodass durch Betätigung des Spannaktors die Spannkraft aufgebracht werden kann.

## Patentansprüche

1. Unterwassergranulierer mit einer Lochplatte (2), einem Schneidkammergehäuse (3) mit einer Schneidkammer (4), sowie einem rotierend antreibbaren Messerkopf (5), der in der Schneidkammer (4) zum Zerteilen von Schmelzesträngen, die aus der Lochplatte (2) austreten, zu Granulat angeordnet ist, wobei die Schneidkammer (4) von Prozesswasser durchspülbar ist, das durch zumindest einen Einlass (6, 7) in die Schneidkammer (4) einleitbar und zusammen mit dem zerteilten Granulat über einen Auslass (8) aus der Schneidkammer (4) abführbar ist, wobei im Schneidkammergehäuse (3) mehrere Strömungskanäle und/oder -kammern zum Erzeugen verschiedener Prozesswasserströme vorgesehen sind, die zumindest einen mitrotierenden Strömungspfad (9), der durch zumindest einen Messerkopfkanal (10) durch den rotierenden Messerkopf (5) hindurchführt, sowie zumindest einen nicht mit dem Messerkopf (5) mitrotierenden Strömungspfad (11), der aus einem feststehenden Einlass (6) in die Schneidkammer (4) führt, **dadurch gekennzeichnet, dass** zumindest zwei separate Einlässe (6, 7) zum separaten Beschicken des mitrotierenden Strömungspfads und des nicht rotierenden Strömungspfads stirnseitig von der der Lochplatte (2) gegenüberliegenden Stirnseite der Schneidkammer (4) in die genannte Schneidkammer (4) geführt sind, wobei im Schneidkammergehäuse (3) zumindest eine ringförmige, feststehende Verteilerkammer (12) vorgesehen ist, die zumindest eine frontal zur Lochplatte (2) direkt in die Schneidkammer (4) mündende Auslassöffnung (13) zum Beschicken des nicht-mitrotierenden Strömungspfads (11) aufweist.

2. Unterwassergranulierer nach dem vorhergehenden Anspruch, wobei der nichtmitrotierende Strömungspfad (11) außerhalb des mitrotierenden Strömungspfads (9) auf die Lochplatte (2) führt und/oder von der Messerkopfdrehachse (20) weiter beabstandet ist als der mitrotierende Strömungspfad (9).

3. Unterwassergranulierer nach einem der vorhergehenden Ansprüche, wobei der nicht rotierende Strömungspfad (11) zumindest näherungsweise parallel zur Rotationsachse des Messerkopfs (5) und/oder im Wesentlichen senkrecht zur Austrittsfläche der Lochplatte (2) auf die Schneidmesser des Messerkopfs (5) geführt ist.

4. Unterwassergranulierer nach Anspruch 1 oder 2, wobei der nicht rotierende Strömungspfad (11) zur Axialrichtung, die von der Messerkopfdrehachse (20) definiert ist, spitzwinklig geneigt, insbesondere in einer die Messerkopfdrehachse (20) enthaltenden, virtuellen Ebene zur Axialrichtung spitzwinklig geneigt ist und/oder aus der genannten virtuellen Ebene heraus spitzwinklig geneigt ist.

5. Unterwassergranulierer nach einem der vorhergehenden Ansprüche, wobei die Auslassmündung (13) zum Beschicken des nicht rotierenden Strömungspfads (11) in einem Durchmesserbereich in die Schneidkammer (4) mündet, der größer ist als ein Außendurchmesser eines Messerträgers (21) des Messerkopfs (5), insbesondere derart dimensioniert und/oder angeordnet ist, dass der aus der genannten Auslassöffnung (13) in die Schneidkammer (4) eintretende Prozesswasserstrom am Außenumfang des Messerkopfs (5) auf die Lochplatte (2) zuströmt.

6. Unterwassergranulierer nach einem der vorhergehenden Ansprüche, wobei die Auslassöffnung (13) zum Beschicken des nicht-mitrotierenden Strömungspfads (11) von der Lochplatte (2) weiter beabstandet ist als die Auslassöffnung des Einlasse (7) zum Beschicken des mitrotierenden Strömungspfads (9).

7. Unterwassergranulierer nach einem der vorhergehenden Ansprüche, wobei in dem Schneidkammergehäuse (3) zwei separate Verteilerkammern (12, 14) vorgesehen sind, von denen eine erste Verteilerkammer (12) über den nicht-mitrotierenden Strömungspfad (11) in die Schneidkammer (4) mündet und eine zweite Verteilerkammer (14) über den mitrotierenden Strömungspfad (9) in die Schneidkammer (4) mündet.

8. Unterwassergranulierer nach einem der vorhergehenden Ansprüche, wobei der mitrotierende Strömungspfad (9) durch den zumindest einen Messerkopfkanal (10) innerhalb der Schneidmesser des Messerkopfs (5) in die Schneidkammer (4) in einen stirnseitigen Spalt zwischen Lochplatte (2) und Messerkopf (5) mündet.

9. Unterwassergranulierer nach einem der vorhergehenden Ansprüche, wobei der mitrotierende Strömungspfad (9) zumindest näherungsweise parallel zur Messerkopfdrehachse (20) und/oder axial im Wesentlichen senkrecht auf die Lochplatte (2) gerichtet ist.

10. Unterwassergranulierer nach einem der Ansprüche 1-8, wobei der mitrotierende Strömungspfad (9) spitzwinklig geneigt zur Lochplatte (2) auf die genannte Lochplatte (2) gerichtet ist, insbesondere in Umfangsrichtung spitzwinklig verkippt ist und/oder radial einwärts oder radial auswärts spitzwinklig verkippt ist.

11. Unterwassergranulierer nach einem der vorhergehenden Ansprüche, wobei die beiden Einlässe (6, 7) zum separaten Beschicken der mitrotierenden und nicht-mitrotierenden Strömungspfade (9, 11) jeweils ringförmige, ineinander sitzende Strömungskanäle bilden, die sich zumindest näherungsweise parallel zur Messerkopfdrehachse (20), insbesondere koaxial zur genannten Messerkopfachse (20), erstrecken, wobei die beiden Einlässe (6, 7) in die Schneidkammer (4) mündende Mündungsöffnungen besitzen, die in Ringbereichen angeordnet sind, die unterschiedlich große Durchmesser besitzen.

12. Unterwassergranulierer nach einem der vorhergehenden Ansprüche, wobei die Auslassöffnung (13) zum direkten Beschicken der Schneidkammer (4) am Messerkopf (5) vorbei eine langlochartige, bogenförmig gekrümmte Kontur besitzt und/oder einen ringförmigen Auslassschlitz um den Messerkopf (5) herum in der Stirnseite der Schneidkammer (5) bildet.

13. Unterwassergranulierer nach einem der vorhergehenden Ansprüche, wobei mehrere Auslassöffnungen (13) mit gleicher oder unterschiedlicher Konturierung zum Beschicken der Schneidkammer (4) vorgesehen sind.

14. Unterwassergranulierer nach einem der vorhergehenden Ansprüche, wobei im Messerkopf (5) mehrere Messerkopfkanäle (10) ausgebildet sind, die entlang einer Ringkontur um die Messerkopfdrehachse (20) herum und/oder zentrisch und/oder exzentrisch bezüglich der genannten Messerkopfdrehachse (20) verteilt angeordnet sind und von einer Stirnseite des Messerkopfs (5) zur gegenüberliegenden Stirnseite des Messerkopfs (5) durch den Messerkopf (5) hindurchtreten, wobei die Messerkopfkanäle (10) parallel zur Messerkopfdrehachse (20) ausgerichtet oder spitzwinklig zur Messerkopfdrehachse (20) nach außen und/oder in Umfangsrichtung geneigt ausgerichtet sind.

15. Unterwassergranulierer nach einem der vorhergehenden Ansprüche, wobei zumindest einer der Einlässe (6, 7) einen vorzugsweise stutzenförmigen Einlass-Anschluss (6a, 7a) an einer Außenumfangsseite des Schneidkammergehäuses (3) aufweist, der tangential zur Umfangsrichtung und/oder spitzwinklig zur Radialrichtung geneigt angeordnet ist derart, dass durch den Einlass-Anschluss (6a, 7a) zugeführtes Prozesswasser eine mit dem Einlass (6, 7) verbundene Verteilerkammer (24, 25) spiralförmig und/oder entlang der Umfangswandung durchströmt, wobei die Neigung des Einlass-Anschlusses derart gewählt ist, dass das Prozesswasser in der genannten Verteilerkammer eine Umlaufrichtung besitzt, die vorzugsweise der Drehrichtung des Messerkopfs (5) entspricht.

16. Unterwassergranulierer nach einem der vorhergehenden Ansprüche, wobei eine Fluidsteuer- und/oder Temperiervorrichtung zum Steuern und/oder Regeln der Strömungsmenge und/oder des Drucks und/oder der Temperatur des Prozesswassers, das dem einen Einlass (6) zugeführt wird, unabhängig von der Strömungsmenge und/oder des Drucks und/oder der Temperatur des Prozesswassers, das dem anderen Einlass zugeführt wird, vorgesehen ist, wobei die Strömungssteuer und/oder Temperiervorrichtung vorzugsweise dazu ausgebildet ist, den Prozesswasserstrom an jedem Einlass (6, 7) hinsichtlich Strömungsmenge und/oder Druck und/oder Temperatur individuell zu steuern und/oder aufeinander abgestimmt zu steuern.

17. Unterwassergranulierer nach einem der vorhergehenden Ansprüche, wobei das Schneidkammergehäuse (3) in zumindest einen festen Gehäuseteil (3a) und zumindest einen beweglichen Gehäuseteil (3b) unterteilt ist, wobei das Schneidkammergehäuse (3) und dessen Schneidkammer (4) durch Wegbewegen des beweglichen Gehäuseteils (3b) vom feststehenden Gehäuseteil (3a) zu öffnen ist, wobei eine Schnitt- und/oder Verbindungsstelle (26) zwischen den feststehenden und beweglichen Gehäuseteilen (3a, 3b) sich zumindest überwiegend in einer schiefen Ebene erstreckt, die zur Messerkopfdrehachse (20) spitzwinklig geneigt ist, vorzugsweise unter einem Winkel im Bereich von 30° bis 80° oder 45° bis 80° oder 50° bis 80°, und/oder zwischen den beweglichen und feststehenden Gehäuseteilen (3a, 3b) in einem Bodenabschnitt des Schneidkammergehäuses (3) näher an der Lochplatte (2) liegt als an einem oberen Endabschnitt des Schneidkammergehäuses (3), wobei die genannte Schnittstelle (26) vorzugsweise am Bodenabschnitt des Schneidkammergehäuses (3) die Schneidkammer (4) an der Lochplatte (2) teilt und am oberen Endabschnitt des Schneidkammergehäuses (3) die ringförmige Verteilerkammer (25) zum Beschicken des nicht mitrotierenden Strömungspfads (11) teilt.

18. Unterwassergranulierer nach dem vorhergehenden Anspruch, wobei der feststehende Gehäuseteil (3a) an der Lochplatte (2) befestigt ist und der bewegliche Gehäuseteil (3b) zusammen mit dem Messerkopf (5) eine gemeinsam verfahrbare Baugruppe bildet, und/oder der Auslass (8) an dem feststehenden Gehäuseteil (3) vorgesehen ist und die Einlässe (6, 7) an dem beweglichen Gehäuseteil (3b) vorgesehen sind.

19. Unterwassergranulierer nach einem der vorhergehenden Ansprüche, wobei der Auslass (8) an einer Oberseite des Schneidkammergehäuses (3) vorgesehen ist und die Einlässe (6, 7) an einer unteren Hälfte des Schneidkammergehäuses (3) vorgesehen sind.

20. Unterwassergranulierer mit einer Lochplatte (2), einem Schneidkammergehäuse (3) mit einer Schneidkammer (4), sowie einem rotierend antreibbaren Messerkopf (5), der in der Schneidkammer (4) zum Zerteilen von Schmelzesträngen, die aus der Lochplatte (2) austreten, zu Granulat angeordnet ist, wobei die Schneidkammer (4) von Prozesswasser durchspülbar ist, das durch zumindest einen Einlass (6, 7) in die Schneidkammer (4) einleitbar und zusammen mit dem zerteilten Granulat über einen Auslass (8) aus der Schneidkammer (4) abführbar ist, insbesondere nach einem der vorhergehenden Ansprüche, **dadurch gekennzeichnet, dass** die genannte Schneidkammer (4) in Umlaufrichtung des Messerkopfs (5) betrachtet ein zum Auslass (8) hin zunehmendes Volumen besitzt, wobei in Umfangrichtung des Messerkopfs (5) betrachtet ein Spaltmaß (S) zwischen der Hüllkontur des Messerkopfs (5) und einer Umfangswandung der Schneidkammer (4) und/oder eine axiale Tiefe (T) in Richtung der Messerkopfdrehachse (20) zum Auslass (8) hin zunimmt.

21. Unterwassergranulierer nach dem vorhergehenden Anspruch, wobei das genannte Spaltmaß (S) und/oder die genannte Kammertiefe (T) jeweils kontinuierlich, vorzugsweise stetig, zum Auslass (8) hin zunehmen und/oder in einem Sektor, der in Umlaufrichtung des Messerkopfs (5) betrachtet unmittelbar hinter dem Auslass (8) liegt, minimal ist und in einem Sektor, der unmittelbar vor dem Auslass (8) liegt, maximal ist.

22. Unterwassergranulierer nach einem der vorhergehenden Ansprüche, wobei der Messerkopf (5) gegenüber einem Zentrum der Schneidkammer (4) exzentrisch versetzt angeordnet ist, insbesondere derart, dass der Versatz zu einem Sektor der Schneidkammer (4) hin gerichtet ist, den die Messer des Messerkopfs (5) nach Passieren des Auslasses (8) erreichen.

23. Unterwassergranulierer nach einem der vorhergehenden Ansprüche, wobei in der Schneidkammer (4) zumindest ein Strömungsleitblech und/oder zumindest ein Deflektor (31) zum Verhindern eines mehrfachen Umlaufens der geschnittenen Granulate vorgesehen ist, wobei das zumindest eine Strömungsleitblech und/oder der zumindest eine Deflektor (31) insbesondere im Bereich des Auslasses (8) entlang der Hüllkontur des Messerkopfs (5) und/oder spitzwinklig geneigt zu der Hüllkontur des Messerkopfs (5) entgegen der dortigen Strömungsrichtung auskragt.
